# EUROPÄISCHE PATENTANMELDUNG

(11) **EP 0 905 144 A1**
(43) Veröffentlichungstag der Anmeldung: **31.03.1999**
(21) Anmeldenummer: 98117836.1
(22) Anmeldetag: 21.09.1998
(51) Int. Cl.: C08B 16/00, C08L 1/28

(54) **Verfahren zur Herstellung von Cellulosepartikeln**

(30) Priorität: 24.09.1997 DE 19742165
(71) Anmelder: Cellcat GmbH, 5400 Hallein (AT)
(72) Erfinder: Oberkofler, Jörg, Dr., 4863 Seewalchen (AT); Brandner, Alexander, Dr., 4663 Laakirchen (AT); Spedding, Jeffrey F., 5081 Anif (AT); Schmalhofer, Anton, 1190 Wien (AT)
(74) Vertreter: Kador & Partner

(57) **Zusammenfassung**

Verfahren zur Herstellung von Cellulosepartikeln, wobei einer Celluloselösung in einem Regenerierungs- bzw. einem Nichtlösungsmittel dispergiert wird und die Cellulose in dispergierter Form zu Cellulosepartikeln regeneriert bzw. ausgefällt wird.

## Beschreibung

Die Erfindung betrifft ein Verfahren zur Herstellung von Cellulosepartikeln sowie eine Vorrichtung zur Durchführung dieses Verfahrens.

Der Erfindung liegt die Aufgabe zugrunde, ein Verfahren und eine Vorrichtung zur Herstellung von Cellulosepartikeln zu schaffen, mit denen Cellulosepartikel einfach und kostengünstig hergestellt werden können. Insbesondere soll eine Vielzahl von Partikelformen und -größen, insbesondere kleiner Partikel, herstellbar sein und die Umstellung von einer Größe auf die andere ohne großen Aufwand zu bewirken sein. Außerdem sollen mit dem Verfahren auch Cellulosepartikel herstellbar sein, die im Inneren kationische Gruppen aufweisen. Schließlich soll das Verfahren und die Vorrichtung die Verwendung einer Vielzahl von Ausgangsstoffen, insbesondere für die Herstellung kationisierter Produkte, erlauben.

Der Erfindung liegt die Erkenntnis zugrunde, daß diese Aufgabe durch ein Verfahren zur Herstellung von Cellulosepartikeln, bei dem eine Celluloselösung in einem Regenerierungsmittel dispergiert wird und die Cellulose in dispergierter Form zu Cellulosepartikeln regeneriert und ausgefällt wird, gelöst werden kann.

Gegenstand der Erfindung ist ein Verfahren, das dadurch gekennzeichnet ist, daß einer Celluloselösung ein Kationisierungsmittel zugegeben wird, die mit Kationisierungsmittel versetzte Celluloselösung in einem Regenerierungsmittel dispergiert wird, wobei die Dispergierung unter Scherbelastung erfolgt, und die Cellulose unmittelbar in dispergierter Form zu längsorientierten, faserförmigen, kationisierten Cellulosepartikeln regeneriert und ausgefällt wird.

Durch ein solches Verfahren ist es möglich, kleine Cellulosepartikel unmittelbar herzustellen, wodurch ein zusätzlicher Verfahrensschritt des Mahlens großer Cellulosepartikel entfällt. Darüberhinaus kann durch dieses Verfahren eine gleichmäßige Größe der hergestellten Partikel gewährleistet werden. Schließlich sind die durch dieses Verfahren hergestellten Partikel aufgrund der Herstellung durch Erzeugung einer feinen Dispersion von einer vorteilhaften Struktur.

Vorzugsweise werden längsorientierte Celluloselösung-Dispersionstropfen im Regenerierungsmittel gebildet. Diese längsorientierten Tropfen weisen eine große Oberfläche, d.h. Grenzfläche zum Regenerierungsmittel auf, wodurch die Ausfällung bzw. Regenerierung schnell von statten gehen kann und somit die in der Dispersion eingestellte Tropfengröße und -form die Partikelgröße und -form des Endproduktes bestimmt.

Gemäß einer bevorzugten Ausführungsform erfolgt die Regenerierung und Ausfällung der Cellulosepartikel unter hoher Scherbelastung. Diese Scherbelastung ist maßgeblich für eine rasche Bildung und Aufrechterhaltung einer feinen Dispersion der Celluloselösung verantwortlich. Durch das Einstellen der Scherbelastung auf verschiedene Werte kann somit die Größe der herzustellenden Partikel variiert werden. Durch hohe Scherbelastung kann z.B. die Größe der herzustellenden Partikel auf kleine Werte eingestellt werden. Bei hoher Scherbelastung wird nämlich eine feine Dispersion erzeugt, die ein rasches Ausfällen bzw. Regenerieren aus der Dispersion in Form von kleinen Partikeln gewährleistet.

Die Celluloselösung wird vorzugsweise, bevor sie in dem Regenerierungsmittel dispergiert wird, mit einem Kationisierungsmittel versetzt. Durch die Zugabe eines solchen Kationisierungsmittels zu der Cellulose können durch das erfindungsgemäße Verfahren kationisierte Cellulosepartikel hergestellt werden. Bevorzugt können so auch Cellulosepartikel hergestellt werden, die im Inneren kationisierte Gruppen aufweisen. Diese sind insbesondere in der Anwendung in der Papier- und Abwasserindustrie von hoher Bedeutung.

Vorzugsweise erfolgt die Zugabe des Kationisierungsmittels kurz vor der Zugabe des Regenerierungsmittels. Durch diese Zugabe unmittelbar vor der Dispergierung können bei dem erfindungsgemäßen Verfahren auch gegenüber dem Regenerierungsmittel instabile kationisierte Celluloselösungen zum Einsatz kommen.

Bevorzugt wird der Dispergierungs- und Regenerierungs- bzw. Fällungsschritt bei einer Temperatur größer als Raumtemperatur durchgeführt. Vorzugsweise beträgt die Betriebstemperatur 40 bis 85°C. Durch diese erhöhten Temperaturen werden die Reaktionen, z.B. die Regenerierung der Cellulose bzw. das Ausfällen, beschleunigt. Die Herstellungsdauer kann durch erhöhte Temperaturen somit verringert werden und das gesamte Verfahren verbessert werden.

Die Cellulosekonzentration in der Celluloselösung beträgt vorzugsweise weniger als 10 Gew.-%, besonders bevorzugt liegt die Konzentration im Bereich von 4 bis 8 Gew.-%. Durch eine geringe Konzentration in der Celluloselösung kann bei dem erfindungsgemäßen Verfahren die Teilchengröße minimiert werden. Gleichzeitig ist eine zu geringe Konzentration von Cellulose in der Celluloselösung ungünstig für die Festigkeit der zu erzeugenden Partikel. Darüberhinaus ist bei zu geringer Konzentration an Cellulose der Aufwand zur Aufarbeitung der Mutterlauge aus dem Prozeß unnötig erhöht.

Als Lösungsmittel für die Cellulose können z.B. N-Methylmorpholin-N-oxid, Lithiumchlorid-Dimethylacetamid, Tetraminkupfer-Kupfer (II) - hydroxid Cuen oder Cuoxam verwendet werden. Weiterhin können Natronlauge und Schwefelkohlenstoff als Lösungsmittel dienen.

In einer bevorzugten Ausführungsform werden die regenerierten Cellulosepartikel zur Entgasung einem Doppelschneckenextruder zugeführt.

Insbesondere beim Viskoseverfahren entstehen bei der Regenerierung Schwefelkohlen- und Schwefelwasserstoffe, die vor der Reinigung und Entwässerung der Cellulosepartikel entfernt werden müssen. Durch die Verwendung eines Doppelschneckenextruders zur Entgasung kann eine vollständige Entgasung gewährleistet werden, und darüberhinaus läßt sich dieses Element unmittelbar an das Auslaufrohr des Dispergiergerätes anschließen.

Zur Herstellung wird eine Vorrichtung verwendet, bei der das Dispergiergerät einen Rotor und einen Stator umfaßt, die jeweils eine Zahnung aufweisen, und bei der in dem Einführungsrohr für die Cellulose zu dem Dispergiergerät eine Mischdüse zur Einleitung des Regenerierungs- bzw. Nichtlösungsmittels angeordnet ist, wobei die Mischdüse mehrere Rohre umfaßt die kurz vor dem zwischen der Zahnung des Rotors und der des Stators gebildeten Spalts enden. Die Zahnung des Rotors befindet sich in dem Fall, in dem der Rotor in dem Stator läuft, an dessen äußerem Umfang und die Zahnung des Stators an dessen innerem Umfang.

Zwischen den Zahnungen des Stators und Rotors kann ein geringer Spalt eingestellt werden, durch den eine hohe Scherkraft auf die Celluloselösung und das Regenerierungs- bzw. Nichtlösungsmittel ausgeübt wird. Darüberhinaus läßt sich bei einer solchen Vorrichtung die Geschwindigkeit des Rotors einstellen und somit die Scherbelastung ebenfalls beeinflussen. Desweiteren wird durch diese Vorrichtung die Möglichkeit gegeben, das Regenerierungs- bzw. Nichtlösungsmittel unmittelbar vor der Dispergiereinrichtung, in der die Dispersion erzeugt und die Cellulose gefällt bzw. regeneriert wird, zuzugeben. Dadurch kann die Zeit zwischen der Zugabe und der Dispergierung auf einem Minimum gehalten werden. Durch diese geringe Zeit wird gewährleistet, daß die Cellulose in dispergierter Form ausgefällt bzw. regeneriert wird. Schließlich weist eine solche Vorrichtung den Vorteil auf, daß ein Mischorgan dieser Dispergierungseinrichtung vorgeschaltet werden kann, in dem gegebenenfalls die Celluloselösung mit Kationisierungsmittel versehen oder die Celluloselösung modifiziert werden kann. Auch der Anschluß an Entgasungsvorrichtungen oder an Einrichtungen zum Entfernen von Nichtlösungsmittelüberschuß im Celluloselösungsprozeß ist mit dieser erfindungsgemäßen Vorrichtung leicht möglich.

Vorzugsweise stellt die Dispergiereinrichtung einen "Pump-Dispergator" dar. Ein solcher Dispergator weist den Vorteil auf, daß die durch ihn erzeugte Scherbelastung auf das Phasengemisch Celluloselösung/Regenerierungsmittel bzw. Nichtlösungsmittel genau eingestellt werden kann und hohe Werte erzielbar sind. Der Pump-Dispergator weist vorzugsweise drei Rotoren in drei hintereinander liegenden Dispergierzonen auf. Durch die mehrfache Behandlung des Dispergiergutes in kürzester Zeit und eine hohe Schergeschwindigkeit sowie Scherbeanspruchung wird die Teilchengröße in der Dispersion gering gehalten. Somit kann sichergestellt werden, daß die ausgefällten Cellulosepartikel eine kleine Teilchengröße aufweisen.

Die mit dem erfindungsgemäßen Verfahren hergestellten Cellulosepartikel weisen vorzugsweise eine mittlere Teilchengröße von 0,001 bis 10 mm, vorzugsweise 0,01 bis 5 mm und insbesondere 0,1 bis 1 mm auf. Diese kleine Teilchengröße führt dazu, daß die Cellulosepartikel vorteilhaft in unterschiedlichen Anwendungen eingesetzt werden können. Insbesondere bei der Verwendung der Cellulosepartikel in Papier- oder Abwasseranlagen ist eine kleine Teilchengröße von Vorteil. In der Papierindustrie z.B. darf die Partikelgröße nämlich nicht dicker als die Papierdicke sein. Zusätzlich können bei geringer Teilchengröße Formationsprobleme ausgeschlossen werden.

Vorzugsweise sind die Cellulosepartikel so beschaffen, daß kationische Gruppen im Inneren der Partikel immobilisiert sind. Solche Cellulosepartikel eignen sich insbesondere für die Verwendung in der Papierherstellung. Durch die kationisierten Gruppen in der Cellulose können Störstoffe aus dem Verfahren der Papierherstellung ausgeschieden werden, wobei das Vorliegen von kationisierten Gruppen auch im Inneren der Cellulose eine höhere Abscheidungsrate der Störstoffe ermöglicht und somit die Wirksamkeit der Cellulosepartikel erhöht.

Die hergestellten Cellulosepartikel sind vorzugsweise Fibride, d.h. faserförmige Partikel mit einer Faserlänge von vorzugsweise max. 1 mm. In dieser Form ist eine größtmögliche Oberfläche gegeben, an der die Cellulosepartikel mit anderen Medien in Kontakt treten können. Insbesondere bei kationisierten Teilchen ist so deren Wirksamkeit bei der Verwendung, z.B. bei der Papierherstellung, hoch.

Die erfindungsgemäßen Cellulosepartikel sind längsorientiert, d.h. ihre Länge ist größer als ihre Breite. Beispielsweise beträgt die mittlere Länge 1000 µ und die mittlere Breite, bzw. der Partikeldurchmesser 20 µ. Bevorzugte Bereiche sind 1/10 bis 1/500 und insbesondere 1/20 bis 1/100. Der Durchmesser der Partikel beträgt vorzugsweise nicht mehr als 50 µ und insbesondere nicht mehr als 20 µ.

Die Erfindung wird im folgenden im Detail beschrieben.

Zur Herstellung von Cellulosepartikeln wird zunächst eine Celluloselösung vorbereitet. Diese kann in einem Mischorgan, das gegebenenfalls ein "Pump-dispergator" sein kann, hergestellt werden. Man unterscheidet insbesondere zwischen Celluloselösungen, in denen die Cellulose chemisch umgesetzt wird, z.B. unter Bildung eines Xanthogenats, und Celluloselösungen, in denen die Cellulose gelöst vorliegt. Die Gewinnung von Cellulosepartikeln aus diesen beiden Lösungen erfolgt im ersten Fall durch Regenerierung und im zweiten Fall durch Ausfällung mit Hilfe eines Nichtlösungsmittels.

Als cellulosische Ausgangsmaterialien für diese Lösung können Cellulose oder aber auch Cellulosederivate in Form von Estern und Ethern Einsatz finden. Die Cellulosederivate können z.B. durch Modifizierung der Cellulose in einem Mischorgan erzeugt werden. Geeignete Ausgangsmaterialien sind unsubstituierter Zellstoff, Cellulose-Ester oder -Ether, Carboxylmethylcellulose, Hydroxyethylcellulose sowie Cellulosesulfat, Celluloseacetat, Chitosan oder Alkalicellulose.

Zur Erzeugung eines Natriumxanthogenats kann die Alkalicellulose mit Schwefelkohlenstoff umgesetzt und in Natronlauge gelöst werden. Auch N-Methylmorpholin-N-oxid, Lithiumchlorid-Dimethylacetamid, Tetraminkupfer-Kupfer (II)-hydroxid Cuen oder Cuoxam können als Lösungsmittel dienen. Im Fall von wasserlöslicher Cellulosederivate kann auch Wasser als Lösungsmittel verwendet werden.

Im Fall der Kationisierung der Celluloselösung werden die kationischen Gruppen an die Hydroxylgruppe der Cellulose kovalent gebunden sein. Es ist jedoch auch eine Einbindung über Ionen und/oder Wasserstoffbrücken möglich.

Vorzugsweise wird die Cellulose in gelöster Form mit einem Kationisierungsmittel versetzt werden.

Als Kationisierungsmittel können Aluminiumsalze wie Polyaluminiumchlorid oder Natriumaluminat eingesetzt werden. Hierbei kann das Polyaluminiumchlorid teilweise hydrolisiert sein. Die Verwendung des Aluminats zeigt den Vorteil auf, daß dieses zusammen mit dem Xanthogenat mit Schwefelsäure ausgefällt werden kann.

Als Kationisierungsmittel können ferner kationische Polyelektrolyte wie Polydialkyl-diallyl-ammonium-Salze, insbesondere Polydialkyl-diallylammoniumchlorid, Dicyandiamid, Dicyandiamidkondensat, Polyamine, Polyimine, wie Polyethylenimin oder Ionene verwendet werden. Weiterhin können als Kationisierungsmittel reaktive Monomere eingesetzt werden, beispielsweise primäre, sekundäre und partiäre Amine, quarternäre Amoniumbasen mit jeweils wenigstens einem mit einer Hydrogruppe der Cellulose umsetzbaren Rest.

Als Regenerierungsmittel werden überlicherweise bei dem erfindungsgemäßen Verfahren Säuren eingesetzt. Im allgemeinen verdünnte Schwefelsäure. Auch Essigsäure oder Ameisensäure kommen in Betracht. Beim N-Methylmorpholin-Oxidverfahren dient Wasser bzw. eine wässrige Aminoxidlösung als Regenerierungsmittel. Bei diesen Systemen werden die Komponenten nachstehend teilweise auch als Nichtlösungsmittel bezeichnet.

Als Nichtlösungsmittel können N-Methylmorpholin-N-oxid oder Lithiumchlorid-Dimethylacetamid in wässriger Lösung sowie Wasser verwendet werden. Zur Regenerierung der Cellulose aus Xanthogenaten wird verdünnte Schwefelsäure eingesetzt.

Insbesondere die Systeme N-Methylmorpholin-N-oxid und Lithiumchlorid-Dimethylacetamid sind gegen das Nichtlösungsmittel Wasser sehr empfindlich. Der Einsatz handelsüblicher wässriger Zusätze ist daher bislang sehr eingeschränkt. Durch das erfindungsgemäße Verfahren können aber auch solche instabilen Lösungen eingesetzt werden. In dem erfindungsgemäßen Verfahren wird entweder der schädliche Wasserüberschuß in einer Entgasungszone entfernt oder die Verweilzeit der instabilen Celluloselösung vor der Regenerierung im Dispergiergerät bis auf unter 1 Sekunde gehalten. Diese geringe Verweilzeit der instabilen Celluloselösung kann im erfindungsgemäßen Verfahren dadurch sichergestellt werden, daß der Auslauf aus dem Mischorgan einen geringstmöglichen Abstand zum Einlauf in das Dispergiergerät hat. Eine Zersetzung der Celluloselösung durch ein Kationisierungsmittel oder ein Lösungsmittel für das Kationisierungsmittel kann somit vermieden werden. Zudem erfolgt die Zugabe von Regenerierungs- bzw. Nichtlösungsmittel unmittelbar vor dem Dispergiergerät. Dadurch wird auch durch diese Mittel die Celluloselösung nicht zersetzt, bevor eine Dispergierung stattgefunden hat. Das Einbringen des Nichtlösungs- bzw. Regenerierungsmittels in das Dispergiergerät erfolgt über eine Mischdüse, deren Ausgang unmittelbar vor der Dispergierzone des Dispergiergerätes liegt. Es liegt aber auch im Sinne der Erfindung, andere Zuführungen des Nichtlösungs- bzw. Regenerierungsmittels zu verwenden, solange sichergestellt ist, daß eine Dispersion der Celluloselösung mit dem Nichtlösungs- bzw. Regenerierungsmittel schnell erzeugt und aufrechterhalten wird und somit die Cellulosepartikel mit einer kleinen Größe gewonnen werden können.

Die Zeit zwischen der Zugabe des Nichtlösungs- bzw. Regenerierungsmittels und der Dispergierung sollte gering gehalten werden. Bei dem erfindungsgemäßen Verfahren wird innerhalb von maximal 1 s, vorzugsweise 0,5 s, insbesondere 0,2 s und insbesondere bevorzugt unter 0,1 s nach Zugabe des Nichtlösungs- bzw. Regenerierungsmittels eine Dispersion mit den gewünschten kleinen Dispersionstropfen erzeugt. Erzielt wird diese kurze Dispersionszeit insbesondere durch die Einwirkung hoher Scherbelastung auf die beiden Phasen Nichtlösungs- bzw. Regenerierungsmittel und Celluloselösung.

Die Scherbelastung wird vorzugsweise durch einen im Dispergiergerät erzeugten Spalt zwischen den Zahnungen des Rotors und Stators des Dispergiergerätes erzeugt. Die Größe dieses Spaltes liegt im µ-Bereich, beispielsweise bei 300 µ. Zusätzlich zu der geringen Spaltgröße wird die Scherbelastung insbesondere durch eine hohe Umfangsgeschwindigkeit des Rotors erzeugt. Vorzugsweise liegt die Umfangsgeschwindigkeit bei 20 m/s. Die Scherbelastung ausgedrückt durch den Energieeintrag liegt im erfindungsgemäßen Verfahren bevorzugt bei 200 kWh/t (Cellulose).

Das Schergefälle, beispielsweise bei einem Spalt von 300 µ, beträgt vorzugsweise 10 bis 80 m/s und insbesondere 20 bis 40 m/s, wobei sich Schergefälle zwischen 25 und 35 m/s als besonders vorteilhaft erwiesen haben.

Ist die Zahnung am Rotor und/oder Stator in einem Winkel zur jeweiligen Achse des Rotors bzw. Stators angebracht, so kann dadurch zusätzlich ein guter Transport der Dispersion durch das Dispergiergerät erzielt werden. Die für die Regenerierung kleiner Cellulosepartikel gemäß dem erfindungsgemäßen Verfahren notwendige Scherbelastung kann aber auch durch andere Maßnahmen erzeugt werden. So ist z.B. ein Dispergiergerät, in das die beiden Phasen (Cellulose-lösung/Regenerierungs- bzw. Nichtlösungsmittel) eingeführt werden, und in dem diese Phasen z.B. durch intensives Rühren dispergiert und hohen Scherbelastungen ausgesetzt werden, einsetzbar.

Bei der Verwendung eines Dispergiergerätes mit Rotor und Stator, die jeweils eine Zahnung aufweisen, wird die zu erzielende Partikelform positiv beeinflußt. Die Zahnungen des Rotors und des Stators bewirken, daß sich in der Dispersion aus Celluloselösung und Regenerierungs- bzw. Nichtlösungsmittel Druck- bzw. Unterdruckzonen bilden, die zu einer Turbulenz in der Dispersion führen und so die Einstellung hoher Scherbelastung und damit die Erzeugung kleiner Cellulosepartikel ermöglichen. Die Turbulenz bewirkt zudem, daß die Scherbelastung zu einer Orientierung der Cellulosetropfen führt und somit die Bildung von Fibriden, d.h. faserförmigen Partikeln, ermöglicht wird. Die erfindungsgemäß erzeugten Dispersionstropfen weisen vorzugsweise ein Durchmesser/Längen-Verhältnis von 1/50 auf.

In den Fällen, in denen die erzeugten Cellulosepartikel Fibride sind, weisen diese vorzugsweise eine Länge von 0,001 bis 10 mm, besonders bevorzugt von 0,1 bis 1 mm, insbesondere von 500 bis 800 µm auf. Die Dicke der Fibride, d.h. deren mittlerer Durchmesser liegt vorzugsweise zwischen 1 und 100 µm, besonders bevorzugt zwischen 5 und 50 µm und insbesondere zwischen 10 und 30 µm.

Um nach dem erfindungsgemäßen Verfahren eine zuverlässige Herstellung von Cellulosepartikeln gewährleisten zu können, ist es notwendig, die Mischung von Celluloselösung und Nichtlösungs- bzw. Regenerierungsmittel ideal einzustellen. Das Verhältnis zwischen den beiden Phasen muß so sein, daß sichergestellt wird, daß das Nichtlösungs- bzw. Regenerierungsmittel als kontinuierliche Phase in der Dispersion vorliegt, wohingegen die Celluloselösung die diskontinuierliche Phase darstellt. Wird nicht ausreichend Regenerierungs- bzw. Nichtlösungsmittel zugegeben, kommt der Cellulose die Funktion der kontinuierlichen Phase in der Dispersion zu, was zu einer Erzeugung eines Celluloseschwamms führen würde, der in dem Dispergiergerät zerstört würde und so zu ungleichmäßigen Cellulosepartikeln schlechter Beschaffenheit führen würde.

Bei dem erfindungsgemäßen Verfahren wird die diskontinuierliche Phase in Form von Celluloselösung-Dispersionstropfen im Dispergator rasch erzeugt. Diese Tropfen reagieren an ihrer Oberfläche mit dem Regenerierungsmittel bzw. die Cellulose wird an der Oberfläche durch Kontakt zum Nichtlösungsmittel ausgefällt. Dadurch bilden sich noch im Dispergiergerät Tropfen einer bestimmten Größe und Orientierung, die zumindest an ihrer Oberfläche eine Haut aus Cellulose aufweisen. Diese Partikel werden entweder noch im Dispergiergerät oder im Auslaufrohr des Dispergiergerätes vollständig regeneriert bzw. ausgefällt. Die Abmessungen des Auslaufrohres werden vorzugsweise so gewählt, daß die Partikel beim Verlassen des Rohres und der Aufgabe auf den Bandfilter oder die Entgasungseinrichtung vollständig, d.h. auch im Inneren, regenerierte bzw. ausgefällte Cellulose aufweisen. Als Auslaufrohr für das Dispergiergerät kann beispielsweise ein Rohr mit einem inneren Durchmeser von 80 mm und einer Länge von 1,5 bis 2 m gewählt werden. Durch die bereits im Dispergiergerät erfolgte Bildung von zumindest einer Haut an der Oberfläche der Tropfen wird gewährleistet, daß sich die Partikel weder im Dispergator noch im Auslaufrohr zu großen Partikeln verbinden, sondern daß die in der Dispersion eingestellte Tropfengröße und -form im wesentlichen die Größe und Form des Entproduktes darstellt. Den normalerweise in den teilregenerierten bzw. teilausgefällten Partikeln herrschenden Kräften, die eine Kontraktion der Partikel zu Kugeln bewirken würden, kann bei den erfindungsgemäßen Partikeln die in der Dispergierzone eingebrachte Längsorientierung entgegenwirken. Dadurch können mit dem erfindungsgemäßen Verfahren Cellulosepartikel verschiedener Form, insbesondere auch Fibride kleiner Größe, hergestellt werden.

Die Form und Größe der Cellulosepartikel, die durch das erfindungsgemäße Verfahren hergestellt werden können, wird folglich durch mehrere Parameter maßgeblich bestimmt bzw. kann durch diese ideal eingestellt werden. Von besonderer Bedeutung sind neben dem gewählten Celluloselösungsverfahren die Konzentration von Cellulose in der Celluloselösung, die Temperatur im Dispergiergerät sowie die Durchsatzmenge im Dispergiergerät. Desweiteren ist die Menge des zugegebenen Nichtlösungs- bzw. Regenerierungsmittels im Verhältnis zu der Celluloselösung von Bedeutung. Schließlich wird die Partikelgröße und -form durch die im Dispergiergerät aufgebrachte Scherbelastung, deren Wert sowie die durch diese in der Celluloselösung verursachte Orientierung mitbestimmt.

Die durch das erfindungsgemäße Verfahren erhaltenen Cellulosepartikel werden bei der Anwendung des Viskoseverfahrens zunächst einer Entgasungszone zugeführt. In dieser Zone werden die verunreinigten Cellulosepartikel von Schwefelkohlenstoff, Schwefelwasserstoff und Natriumsulfat befreit. Die Entgasung kann in einem Doppelschneckenextruder oder in herkömmlichen Entgasungsvorrichtungen durchgeführt werden. Im Anschluß daran wird die Cellulose auf ein Bandfilter gegeben, wo Säureüberschuß und Natriumsulfat entfernt werden. Schließlich wird noch auf dem Bandfilter entwässert. Die übrigen Verfahren bedürfen keiner Entgasung, so daß die ausgefällte Cellulose direkt auf den Bandfilter zum Entfernen des Celluloselösungsmittels gebracht werden kann. Das vom Bandfilter abgenommene, noch feuchte Material kommt bei der Anwendung in der Papierherstellung und Abwassertechnik ohne Trocknung in den Handel.

Das erfindungsgemäße Verfahren weist folgende Vorteile auf:
- Verwendbarkeit von im System instabilen Zusätzen wie Kationisierungsmittel oder deren Lösungsmittel (z.B. Wasser);
- Herstellung der gewünschten Partikelform und Partikelgröße in einem einzigen Prozeßschritt;
- Weites Partikelformspektrum durch Veränderung der Prozeßparameter möglich;
- Kontinuierlicher Prozeß von der Celluloselösung bis zum Handelsprodukt;
- Sehr rascher Produktionswechsel mit geringstem Ausschußanfall.

Anhand der Beispiele, die den Schutzbereich nicht beschränken, wird die Erfindung näher erläutert:

### Beispiel 1

Über Dosierpumpen werden jeweils 208 l/h Viskose (10% Cellulosegehalt), 33,3 l/h Kationisierungsmittel Catiofast PR 8106, BASF (12% Aktivsubstanzgehalt) und 194 l/h Verdünnungswasser dem Mischorgan Hed-Reactor Typ HED 2000/50 B an der Einlaufseite gemeinsam aufgegeben. Die Homogenisierung der 3 Komponenten erfolgt bei einer Drehzahl von 3000 min⁻¹ und einer Umfangsgeschwindigkeit von 12 m/sec. Die dabei erhaltene kationisierte Celluloselösung mit 4,8% Cellulosegehalt wird unmittelbar der Regeneration im Dispax-Reactor DR 3/6 246 S zugeführt. In der Einlauföffnung des Dispax-Reactors ist noch eine Mischdüse derart eingebaut, daß die aus 11 Einzelrohren bestehende Mischdüse bis kurz vor die erste Dispergierzone führt. Über die Mischdüse werden 500 l/h 5 %ige Schwefelsäure zugesetzt. Durch die Verwendung der Mischdüse ist sichergestellt, daß die Viskoselösung nicht vorzeitig zersetzt wird, sondern mit der Schwefelsäure in der Scherzone auf die für die Anwendung der kationischen Cellulose erforderliche Partikelgröße dispergiert wird und erst dann zu Cellulose regeneriert wird. Der Dispax-Reactor wird mit einer Drehzahl von 8000 min⁻¹ und einer Umfangsgeschwindigkeit von 21 m/sec betrieben.

Alle Komponenten werden bei Raumtemperatur zugegeben. Durch die Wärmetönung der Viskosezersetzung und den Energieeintrag des Dispax-Reactors erhöht sich die Temperatur bis zum Auslauf um 10°C auf ca. 30°C.

Der Auslauf des Dispax-Reactors mündet in den Einlauf eines Doppelschneckenextruders mit Entgasungszone wo CS₂ und H₂S entfernt werden.

Die entgaste Reaktionsmischung wird einem Bandfilter mit mehreren Waschzonen, Neutralisation und Preßzone aufgegeben. Das vom Bandfilter abgenommene Produkt enthält neben kationischer Cellulose noch 85% Wasser. Die Waschwässer enthalten nur Spuren Kationisierungsmittel. Die Kationizität der Cellulose wird wie folgt bestimmt.

Nach obigem Verfahren gewonnenes Produkt wird mit einem Überschuß von standartisierter 0,01 N Na-Polyethylen-Sulfonsäure (Na-PES) gemischt und 1 Stunde gerührt. Dann werden die Feststoffe durch Zentrifugation abgetrennt und ein Aliquot des klaren Überstandes gegen 0,01 N poly-Diallyl-Dimethylammoniumchlorid (Poly DADMAC) im Partikelladungsdetektor titriert. Aus dem Verbrauch an Poly-DADMAC wird die Ladung des Produktes berechnet.

Die durch Rücktitration gemessene Kationizität liegt im allgemeinen höher als die direkt gemessene Kationizität. Dies kann dadurch erklärt werden, daß bei der Rücktitration das Reagenz aufgrund der längeren Dauer auch in die Cellulosestruktur penetriert und so auch mit den weniger zugänglichen Ladungsträgern reagieren kann.

Die durch dieses Verfahren festgestellte Kationizität der Cellulose liegt bei 900 µeq/g Trockensubstanz.

### Beispiel 2

Eine Celluloselösung in Lithiumchlorid, Dimethylacetamid (DMA) und Wasser wird wie folgt hergestellt.

Gebleichter, feucht gelagerter Zellstoff wird zu einer Mischung von Lithiumchlorid und Dimethylacetamid zugegeben, so daß die Komponenten in folgendem Verhältnis vorhanden sind: 5 Teile Cellulose (trocken), 11 Teile Lithiumchlorid, 82 Teile Dimethylacetamid und etwas Wasser (von dem feuchten Zellstoff).

Diese Mischung wird mit einem stark scherenden Rührwerk homogenisiert und unter Vakuum bei 80°C gehalten, bis der Wassergehalt auf 3% gesunken ist. Trockenstickstoffgas wird durch die Mischung gesprudelt, um die Wasserentfernung zu unterstützen.

Die entstehende Suspension wird auf 5°C gekühlt und einen Tag bei dieser Temperatur gelagert. Mit periodischem Rühren wird die Auflösung der suspendierten Cellulose unterstützt.

Eine 40 Gew.-%ige, wässrige Lösung von einem poly-Diallyl-Dimethylammoniumchlorid (unter dem Handelsnamen Floerger FL 45 C erhältlich) wird das Kationisierungsmittel verwendet.

Über Dosierpumpen werden 429,6 kg/h Celluloselösung und 5,4 kg/h Kationisierungsmittel dem Mischorgan Hed-Reaktor Typ HED 2000/50B an der Einlaufstelle gemeinsam aufgegeben und analog Beispiel 1 homogenisiert.

Diese Celluloselösung wird in einem Dispax-Reactor 3/6 246 P analog Beispiel 1 zur Regenerierung aufgegeben. Bei einem Celluloselösungsdurchsatz von 435 l/h werden statt Schwefelsäure 500 l/h Wasser über die Mischdüse als Nichtlösungsmittel zugegeben. Die regenerierte kationische Cellulose wird auf einem Bandfilter gewaschen und eingedickt.

### Beispiel 3

In einem Doppelschneckenextruder mit Entgasungszone und gleichlaufenden Schnecken wird über eine Dosierdoppelschnecke kontinuierlich 350 g/min gebleichter Laubzellstoff zugegeben. Eine Mischung von N-Methylmorpholin-N-oxid, Kationisierungsmittel poly-Diallyldimethylammoniumchlorid (unter dem Handelsnamen Floerger FL 45 C mit 40% Aktivgehalt in Wasser erhältlich) und Gallussäurepropylester im Verhältnis 97,8:2,2:0,01 wird bei 70°C in einem Vorratsbehälter als Schmelze direkt in die Einzugszone des Extruders dosiert. Die Verweilzeit im Extruder beträgt 4 min bei 160°C. Die erhaltene kationische Celluloselösung wird unmittelbar einem Dispax-Reactor 3/6 246 P zugeführt, wo über die Mischdüse 11,7 l/min Wasser oder N-Methylmorpholin-N-oxid haltigem Waschwasser vom nachgeschalteten Bandfilter zugegeben werden. Die regenerierte Cellulose wird über den Bandfilter vom Celluloselösungsmittel befreit und eingedickt.

## Patentansprüche

1. Verfahren zur Herstellung von längsorientierten, faserförmigen, kationisierten Cellulosepartikeln, **dadurch gekennzeichnet**, daß einer Celluloselösung ein Kationisierungsmittel zugegeben wird, die mit Kationisierungsmittel versetzte Celluloselösung in einem Regenerierungsmittel dispergiert wird, wobei die Dispergierung unter Scherbelastung erfolgt, und die Cellulose unmittelbar in dispergierter Form zu längsorientierten, faserförmigen, kationisierten Cellulosepartikeln regeneriert und ausgefällt wird.

2. Verfahren gemäß Anspruch 1, **dadurch gekennzeichnet**, daß längsorientierte Celluloselösungs-Dispersionstropfen im Regenerierungsmittel gebildet werden.

3. Verfahren gemäß Anspruch 1 oder 2, **dadurch gekennzeichnet**, daß die Regenerierung und Ausfällung unter hoher Scherbelastung erfolgt.

4. Verfahren gemäß einem der Ansprüche 1, 2 oder 3, **dadurch gekennzeichnet**, daß die Celluloselösung mit einem Kationisierungsmittel versetzt wird bevor sie in dem Regenerierungsmittel dispergiert wird.

5. Verfahren gemäß Anspruch 4, **dadurch gekennzeichnet**, daß die Zugabe des Kationisierungsmittels kurz vor der Zugabe des Regenerierungsmittels erfolgt.

6. Verfahren gemäß einem der Ansprüche 1 bis 5, **dadurch gekennzeichnet**, daß die Dispergierung und Regenerierung und Fällung bei einer Temperatur größer Raumtemperatur, vorzugsweise bei 40 bis 85°C, durchgeführt wird.

7. Verfahren gemäß einem der Ansprüche 1 bis 6, **dadurch gekennzeichnet**, daß die Cellulosekonzentration in der Celluloselösung weniger als 10%, vorzugsweise 4 bis 8% beträgt.

8. Verfahren gemäß einem der Ansprüche 1 bis 7, **dadurch gekennzeichnet**, daß N-Methylmorpholin-N-oxid, Lithiumchlorid-Dimethylacetamid, Tetraminkupfer-Kupfer (II) -hydroxid Cuen oder Cuoxam als Lösungsmittel für die Cellulose oder das Viskoseverfahren verwendet werden.

9. Verfahren gemäß einem der Ansprüche 1 bis 8, **dadurch gekennzeichnet**, daß die regenerierten Cellulosepartikel zur Entgasung einem Doppelschneckenextruder zugeführt werden.

10. Vorrichtung zur Durchführung eines Verfahrens gemäß einem der Ansprüche 1 bis 9, **dadurch gekennzeichnet**, daß das Dispergiergerät einen Rotor und einen Stator umfaßt, die jeweils eine Zahnung aufweisen und daß in dem Einführungsrohr für die Celluloselösung zu dem Dispergiergerät eine Mischdüse zur Einleitung des Regenerierungs- bzw. Nichtlösungsmittels angeordnet ist, wobei die Mischdüse mehrere Rohre umfaßt und kurz vor dem Spalt endet, der zwischen der Zahnung des Rotors und des Stators gebildet ist.

11. Vorrichtung gemäß Anspruch 10, **dadurch gekennzeichnet**, daß das Dispergiergerät einen Pump-Dispergator umfaßt.

12. Cellulosepartikel, die nach einem Verfahren gemäß einem der Ansprüche 1 bis 9 hergestellt sind, **dadurch gekennzeichnet**, daß diese eine mittlere Teilchengröße von 0,01 bis 10 mm, insbesondere 0,1 bis 1 mm aufweisen.

13. Cellulosepartikel gemäß Anspruch 12, **dadurch gekennzeichnet**, daß kationische Gruppen im Inneren der Cellulose immobilisiert sind.

14. Cellulosepartikel gemäß Anspruch 12 oder 13, **dadurch gekennzeichnet**, daß die Partikel Fibride sind.
